(19) Europäisches Patentamt
European Patent Office
Office européen des brevets

(11) **EP 3 187 054 A1**

## (12) EUROPEAN PATENT APPLICATION
published in accordance with Art. 153(4) EPC

(43) Date of publication:
**05.07.2017 Bulletin 2017/27**

(21) Application number: **15836472.9**

(22) Date of filing: **16.06.2015**

(51) Int Cl.:
***A23K 50/00*** (2016.01)    ***A23K 10/00*** (2016.01)
***A23K 10/40*** (2016.01)

(86) International application number:
**PCT/JP2015/067278**

(87) International publication number:
**WO 2016/031356 (03.03.2016 Gazette 2016/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **29.08.2014 JP 2014176529**

(71) Applicant: **Unicharm Corporation
Ehime 799-0111 (JP)**

(72) Inventors:
• **IKEZAKI Yuma
Itami-shi
Hyogo 664-0831 (JP)**
• **MIYAMOTO Katsunori
Itami-shi
Hyogo 664-0831 (JP)**

(74) Representative: **Dolleymores
9 Rickmansworth Road
Watford, Hertfordshire WD18 0JU (GB)**

## (54) PET FOOD

(57)     Provided is pet food including: mock meat pieces which contain animal protein raw ingredients and vegetable protein raw ingredients; and meat flakes, in which the moisture content is 50% by mass or greater, the content of vegetable protein is 4% by mass or greater in terms of dry matter, and the content of methionine is in a range of 0.62% to 1.5% by mass in terms of dry matter.

**Description**

Technical Field

The present invention relates to pet food.
Priority is claimed on Japanese Patent Application No. 2014-176529, filed on August 29, 2014, the content of which is incorporated herein by reference.

Background Art

The purposes of pet food are divided into comprehensive nutritional diet, snack between meal, and nutritional diet.
The comprehensive nutritional diet indicates food that provides nutrition sufficient enough for pet to maintain the health by taking only the food and water and is required to satisfy the prescribed nutritional standards. In Japan, the nutritional standards of Association of America Feed Control Officials (AAFCO) are adopted.
In recent years, various types of pet food are on the market. Dry type pet food (hereinafter, also referred to as dry food) with a low moisture content is the mainstream because dry type pet food has excellent storage stability and is inexpensive. Meanwhile, wet type pet food (hereinafter, also referred to as wet food) which contains a liquid-like or jelly-like soup and has a high moisture content is increasingly sold.
As the wet pet food, a jelly-like or gruel-like pet food formed by blending and processing meat, bones and bone powder, cereals, vegetables, fruits, and animal vegetable fibers through cooking processing means such as crushing and pulverizing, boiling, and squeezing is disclosed (PTL 1).

Citation List

Patent Literature

[PTL 1] Japanese Unexamined Patent Application, First Publication No. 2007-20448

Summary of Invention

Technical Problem

Among the wet type pet foods, wet food having ingredients that include flakes formed of fish or livestock meat itself as the main components has high palatability and is preferred by purchasers.
However, in a case of dry food, nutritional components can be easily adjusted by formulation. Meanwhile, in a case of wet food that includes flakes formed of fish or livestock meat itself as the main components, it is not easy to satisfy the prescription of the comprehensive nutritional diet.
Particularly, the comprehensive nutritional diet for cats is prescribed such that the minimum valent of the content of methionine (with respect to dry matter) is 0.62% by mass and the maximum valent thereof is 1.5% by mass. However, according to the knowledge of the present inventors, wet food of the related art which includes flakes formed of fish or livestock meat itself as the main components has a problem in that methionine is likely to be excessive compared to the prescription.
The present invention has been made in consideration of the above-described circumstances, and an object thereof is to provide wet food which contains fish and livestock meat and is capable of satisfying the prescription of the content of methionine as the comprehensive nutritional diet.

Solution to Problem

According to the present invention, there is provided pet food including: mock meat pieces which contain animal protein raw ingredients and vegetable protein raw ingredients; and meat flakes, in which the moisture content is 50% by mass or greater, the content of vegetable protein is 4% by mass or greater in terms of dry matter, and the content of methionine is in a range of 0.62% to 1.5% by mass in terms of dry matter.
It is preferable that the mock meat pieces include fibrous mock meat pieces.
It is preferable that the mass ratio of the content of mock meat pieces to the content of meat flakes is in a range of 40:60 to 60:40.
It is preferable that the mock meat pieces are obtained by extruding and forming, heating, and cutting a raw ingredient mixture containing animal protein raw ingredients and vegetable protein raw ingredients.

In this case, it is preferable that the mock meat pieces contain 5% to 50% by mass of fibrous vegetable protein raw ingredients as the vegetable protein raw ingredients.

Further, it is preferable that the mock meat pieces are obtained by performing a process of kneading, cooling, and extruding and forming a raw ingredient mixture containing animal protein raw ingredients and vegetable protein raw ingredients while pressurizing and heating the raw ingredient mixture.

Advantageous Effects of Invention

According to the present invention, it is possible to obtain wet food which contains fish and livestock meat and is capable of satisfying the prescription of the content of methionine as the comprehensive nutritional diet.

Description of Embodiments

Hereinafter, embodiments of pet food of the present invention will be described.

The pet food of the present embodiment is wet type pet food and contains meat flakes (hereinafter, also simply referred to as flakes), mock meat pieces, and a soup portion. The pet food may contain ingredients other than meat flakes and mock meat pieces.

The moisture content of the pet food of the present embodiment is 50% by mass or greater.

The content of methionine in the pet food of the present embodiment is in a range of 0.62% by mass to 1.5% by mass in terms of dry matter.

The content of vegetable protein in the pet food of the present embodiment is 4% by mass or greater in terms of dry matter.

<Method of measuring moisture content>

The moisture content of the pet food (unit: % by mass) is acquired by a normal pressure heating and drying method. The moisture content acquired by this method includes the moisture in the ingredients (including meat flakes and mock meat pieces)

(Normal pressure heating and drying method)

The mass (W1 gram) of an aluminum weighing can is measured in advance as a constant weight value. A sample is put into the aluminum weighing can and the mass (W2 gram) is weighed. Next, the sample is dried under the conditions of 135°C for 2 hours using a forced circulation type hot air drier. The sample stands and cools in a dry atmosphere (in a silica gel desiccator) and the mass thereof (W3 gram) is weighed. The moisture content is acquired from the obtained respective mass values using the following expression.

$$\text{Moisture content (unit: \% by mass)} = (W2 - W3) \div (W2 - W1) \times 100$$

<Method of measuring content in terms of dry matter of methionine>

The content of methionine (in terms of dry matter) in pet food is measured by a known amino acid analysis method described below. The unit thereof is % by mass.

(Analysis of free amino acids)

25 ml of a 10 w/v% sulfosalicylic acid solution is added to 1.5 g of a sample to be mixed with each other, and the mixture is shaken for 20 minutes and then extracted. 3 mol/L of a sodium hydroxide solution is added to the obtained extract to be neutralized, a sodium citrate buffer having a pH of 2.2 is added thereto, the pH of the extract is adjusted to 2.2 such that the total amount of the extract is 50 ml, and then the extract is filtered.

Some of the obtained filtrate is fractionated to prepare a sample solution and free amino acids are quantified according to an amino acid automatic analysis method. 17 kinds of free amino acids, which are arginine, lysine, histidine, phenylalanine, tyrosine, leucine, isoleucine, methionine, valine, alanine, glycine, proline, glutamic acid, serine, threonine, aspartic acid, and cysteine, can be quantified as necessary.

(Conditions of operating amino acid automatic analyzer)

Model: L-8800 type high-speed amino acid analyzer [manufactured by Hitachi High-Technologies Corporation]
Column: Hitachi custom ion exchange resin, $\phi$4.6 mm x 60 mm [manufactured by Hitachi High-Technologies Corporation]
Mobile phase: MCI L-8500-PF (PF-1 to PF-4) [manufactured by Mitsubishi Chemical Corporation]
Reaction solution: ninhydrin color development solution kit for Hitachi [manufactured by Wako Pure Chemical Industries, Ltd.]
Flow rate: mobile phase (0.35 ml/min), reaction solution (0.30 ml/min)
Measurement wavelength: 570 nm (at the time of measuring 16 kinds of free amino acids except for proline), 440 nm (at the time of measuring proline)

<Method of measuring content of vegetable protein (in terms of dry matter)>

The content (in terms of dry matter) of vegetable protein in pet food is calculated based on the content of protein in raw ingredients derived from vegetables.
The content of protein in raw ingredients derived from vegetables can be measured by a known Kjeldahl method. The unit thereof is % by mass.

<Meat flake>

The pet food of the present embodiment contains meat flakes as ingredients. Meat indicates livestock meat or fish. Meat flakes are processed into small pieces using a known method of flaking and cutting meat and do not contain raw ingredients other than meat.
Examples of livestock meat include beef, pork, lamb, and poultry. Examples of fish include tuna, bonito, sardines, barracuda, sea bream, flounder, mackerel, and horse mackerel. The meat may be used alone or in combination of two or more kinds.
The size of a flake is not particularly limited. From the viewpoint of good appearance, it is preferable that the flakes are large, but it is difficult for a cat to eat the flakes in a case where the flakes are extremely large. For example, the longest diameter (hereinafter, referred to as the longest diameter) passing through the center of a flake is preferably in a range of 0.5 to 30 mm and more preferably in a range of 0.5 to 1.5 mm.

<Mock meat pieces>

The pet food of the present embodiment includes mock meat pieces as ingredients. The mock meat pieces in the present embodiment are obtained by processing a mixture containing animal protein raw ingredients and vegetable protein raw ingredients into small pieces. The mock meat pieces may contain raw ingredients other than the animal protein raw ingredients and the vegetable protein raw ingredients.
Examples of the animal protein raw ingredients include meat (livestock meat or fish), dairy products (milk protein concentrates, cheese, and the like), and eggs (egg white, egg yolk, and the like).
Examples of the vegetable protein raw ingredients include soybean protein, wheat protein (wheat gluten or corn gluten), and fibrous vegetable protein raw ingredients described below.
The soybean protein may be concentrated soybean protein obtained by mainly removing saccharides and ash from defatted soybean or separated soybean protein obtained by separating only protein. The soybean protein may be powdery soybean protein obtained by forming separated soybean protein in the form of dry powder or may be fibrous soybean protein obtained by organizing and processing separated soybean protein in the form of fibers according to a known technique.
Other raw ingredients are not particularly limited and raw ingredients used for pet food of the related art can be used.
It is preferable that the mock meat pieces contain oils and fats. Examples of oils and fats include fish oil, beef tallow, lard, and chicken fat.
Examples of other components include salts (non-iodine salt, vitamins, minerals, cellulose, a starch adhesive (carrageenan, guar gum, or the like), an adhesive (sodium tripolyphosphate, tricalcium phosphate, or the like), an emulsifier (sodium caseinate, sorbitan fatty acid ester, or the like), a colorant (titanium dioxide, iron oxide, or the like), and a color developing agent (sodium nitrate, or the like).
The shape and the size of the mock meat pieces are not particularly limited. From the viewpoint of good appearance, it is preferable that the mock meat pieces are large, but it is difficult for a pet to eat the mock meat pieces in a case where the mock meat pieces are extremely large or extremely small.

For example, the longest diameter thereof is preferably in a range of 1 to 5 mm and more preferably in a range of 3 to 5 mm.

It is preferable that the mock meat pieces include fibrous mock meat pieces. The fibrous mock meat pieces of the present embodiment mean that the structure of mock meat pieces has a fibrous appearance with directionality.

Since the appearance of fibrous mock meat pieces is similar to the appearance of meat flakes, pet food which contains both of meat flakes and mock meat pieces and does not have inferior appearance compared to a case where pet food mainly contains meat flakes (does not contain mock meat pieces) can be obtained.

The proportion of fibrous mock meat pieces in the mock meat pieces is not particularly limited, but it is possible to obtain appearance similar to the appearance of pet food that mainly contains meat flakes as the proportion of the fibrous mock meat pieces is larger. Specifically, the proportion of the fibrous mock meat pieces in the mock meat pieces is preferably 50% by mass or greater, more preferably 70% by mass or greater, still more preferably 90% by mass or greater, and particularly preferably 100% by mass.

The mock meat pieces can be produced by the following [first production method] or the following [second production method].

[First production method]

A method of producing mock meat pieces by mixing the entire raw ingredients of mock meat pieces, which contain animal protein raw ingredients and vegetable protein raw ingredients to obtain a raw ingredient mixture and then extruding and forming, heating, and cutting the raw ingredient mixture.

The shape of the extrusion-formed product is not particularly limited, but a shape in which subsequent processes are easily performed is preferable. For example, it is preferable that the product is formed in a rod shape (a round rod shape, a square rod shape, or the like).

The raw material mixture is heated under conditions in which protein is solidified due to heat denaturation. The raw material mixture is heated under the conditions of preferably 70°C to 120°C for 5 to 40 minutes and more preferably 80°C to 100°C for 15 to 25 minutes.

After the heating, it is preferable that the raw ingredient mixture is subjected to cutting processing after the temperature is decreased to approximately room temperature. The cutting processing can be performed using a slicer (dicer or the like) and a cutter (a silent cutter, guillotine cutter, or the like).

Particularly from the viewpoint of easily obtaining excellent formability in the present method, the content of the animal protein raw ingredients is preferably in a range of 20% to 60% by mass, more preferably in a range of 20% to 50% by mass, and still more preferably in a range of 25% to 40% by mass with respect to the total content of the raw ingredients of mock meat pieces.

The content of the vegetable protein raw ingredients is preferably in a range of 5% to 50% by mass and more preferably in a range of 10% to 50% by mass with respect to the total content of the raw ingredients of mock meat pieces.

The total content of the animal protein raw ingredients and the vegetable protein raw ingredients is preferably in a range of 25% to 100% by mass and more preferably in a range of 35% to 90% by mass with respect to the total content of the raw ingredients of mock meat pieces. The mass ratio of the animal protein raw ingredients to the vegetable protein raw ingredients contained in the mock meat pieces is preferably in a range of 4:1 to 1:2 and more preferably in a range of 2:1 to 4:5.

The content of oils and fats is preferably in a range of 2% to 15% by mass and more preferably in a range of 10% to 13% by mass with respect to the total content of the raw ingredients of mock meat pieces.

The contents of components other than the animal protein raw ingredients, the vegetable protein raw ingredients, and oils and fats is preferably in a range of 2% to 20% by mass and more preferably in a range of 5% to 9% by mass with respect to the total content of the raw ingredients of mock meat pieces.

According to the present method, fibrous mock meat pieces can be obtained by using fibrous vegetable protein raw ingredients as a part or the entirety of the vegetable protein raw ingredients.

Examples of the fibrous vegetable protein raw ingredients include fibrous soybean protein.

In a case where fibrous mock meat pieces are produced, it is preferable that the cutting processing is performed using a slicer rather than a cutter, from the viewpoint of easily obtaining mock meat pieces having a fibrous appearance.

The mock meat pieces containing fibrous vegetable protein raw ingredients may have the appearance and the texture similar to those of flakes.

In a case of using the fibrous vegetable protein raw ingredients, the content of the fibrous vegetable protein raw ingredients is preferably in a range of 5% to 50% by mass and more preferably in a range of 5% to 25% by mass with respect to the total content of the raw ingredients of mock meat pieces. The appearance and the texture similar to those of flakes can be easily obtained when the content of the fibrous vegetable protein raw ingredients is 5% by mass or greater. Excellent formability can be easily obtained when the content of the fibrous vegetable protein raw ingredients is 50% by mass or less.

[Second production method]

A method of producing mock meat pieces by mixing the entire raw ingredients of mock meat pieces, which contain animal protein raw ingredients and vegetable protein raw ingredients to obtain a raw ingredient mixture and then performing a process of kneading, cooling, and extruding and forming the raw ingredient mixture while pressurizing and heating the raw ingredient mixture.

According to the present method, fibrous mock meat pieces can be obtained without using fibrous vegetable protein raw ingredients.

The process of pressurizing, heating, cooling, extruding, and forming the raw ingredient mixture can be performed using an extruder provided with a cooling die in a discharging unit. For example, a biaxial extruder can be suitably used.

The raw ingredient mixture is heated using the extruder under the conditions of preferably 130°C to 160°C and more preferably 140°C to 150°C. The raw ingredient mixture is pressed under conditions in which the pressure applied to a discharging end is preferably in a range of 410 to 690 kPa and more preferably in a range of 480 to 620 kPa.

When the kneaded product kneaded by the extruder is cooled using a cooling die and extruded and formed, puffing of mock meat pieces can be suppressed. It is preferable that the cooling temperature is set so as to obtain substantially non-puffed mock meat pieces. For example, the temperature of the kneaded product immediately before being extruded and formed is preferably lower than 100°C and more preferably 40°C or lower. The lower limit of the temperature of the kneaded product is not particularly limited, but is preferably 15°C or higher.

The shape of the extrusion-formed product is not particularly limited, but a shape in which subsequent processes are easily performed is preferable. For example, it is preferable that the product is formed in a rod shape (a round rod shape, a square rod shape, or the like).

Fibrous mock meat pieces are obtained by performing cutting processing on the obtained extrusion-formed product. The cutting processing can be performed using a slicer (dicer or the like) and a cutter (a silent cutter, guillotine cutter, or the like).

<Other ingredients>

The pet food of the present embodiment may contain other ingredients such as vegetables, cereals, and mushrooms other than the meat flakes and mock meat pieces. When the pet food contains the ingredients, the nutritional balance of the pet food is improved and thus the palatability of pet food for pets can be improved. Other ingredients may be used alone or in combination of two or more kinds thereof.

Examples of the vegetables include cabbage, spinach, pumpkin, green pepper, carrots, burdock, potatoes, asparagus, soybeans, and green peas. In addition, vegetable processed products (tofu and the like) are also exemplified.

Examples of the cereals include wheat and corn. In addition, cereal processed products (biscuits, cereal-containing mock meat pieces, and the like) are also exemplified.

Examples of the mushrooms include shiitake mushrooms and mushrooms. In addition, mushroom processed products are also exemplified.

<Soup portion>

The soup portion may be in a liquid state or a gel state.

The soup portion contains water. The composition of the soup portion is not particularly limited and the soup portion may contain raw ingredients of a soup portion other than water. Examples of the raw ingredients of the soup portion other than water include oils and fats, a thickener, and other additives (such as a preservative and a palatability enhancer).

The content of water of the soup portion is adjusted such that the moisture content of the entire pet food is set to be a desired value.

<Pet food>

Pet food is obtained by mixing the meat flakes, the mock meat pieces, the soup portion, and other ingredients as necessary.

The soup portion may be prepared by mixing the raw ingredients of the soup portion in advance and the pet food may be obtained by collectively mixing the meat flakes, the mock meat pieces, the raw ingredients of the soup portion, and other ingredients as necessary.

Further, from a viewpoint of capability of long-term storage, the process of producing the pet food includes a process of filling the pouch container with pet food and performing retort-sterilization using a known heat treatment or pressurizing treatment. The retort sterilization process is not particularly limited as long as sterilization is carried out under the condition in which the pet food is sufficiently sterilized and sterilization under the condition in which the flavor of the pet food after the sterilization treatment is not to deteriorate is preferable. The retort sterilization may be carried out under the conditions of a temperature range of 110°C to 130°C for 30 minutes to 50 minutes.

The container is not limited to a pouch container and known containers of wet food can be suitably used.

For example, cans or cup containers may be also used.

The pet food of the present embodiment is of a wet type and the moisture content thereof is 50% by mass or greater. The moisture content can be adjusted by the content of the soup portion. The moisture content is preferably in a range of 50% to 95% by mass and more preferably in a range of 70% to 95% by mass.

The pet food of the present embodiment contains mock meat pieces and meat flakes such that the content of vegetable protein (in terms of dry matter) is set to 4% by mass or greater and the content of methionine is set to 0.62% to 1.5% by mass in terms of dry matter.

When the content of the mock meat pieces is increased, the content of the vegetable protein raw ingredients is increased and the content of methionine is decreased. When the content of meat flakes is increased, the content of methionine is increased.

The content of vegetable protein raw ingredients is preferably 10% by mass or greater and more preferably 20% by mass or greater with respect to the total content of the pet food. The upper limit of the content of the vegetable protein raw ingredients is not particularly limited as long as the content of methionine is 0.62% by mass or greater. The upper limit thereof is preferably 40% by mass or less and more preferably 30% by mass or less.

The mass ratio of the content of mock meat pieces to the content of meat flakes in the pet food is preferably in a range of 40:60 to 60:40 and more preferably in a range of 40:50 to 50:40. When the proportion of the flakes is greater than or equal to the lower limit of the above-described range, excellent palatability is easily obtained. When the proportion of the flakes is lower than or equal to the upper limit of the above-described range, mock meat pieces that satisfy the prescription as the comprehensive nutritional diet are easily obtained.

The total proportion of raw ingredients (all ingredients other than the soup portion) in the pet food is preferably in a range of 20% to 80% by mass, more preferably in a range of 25% to 75% by mass, and still more preferably in a range of 30% to 70% by mass with respect to the entire pet food. When the proportion of the raw ingredients is set to be in the above-described range, pet food with an excellent appearance, excellent palatability, and the rate of complete eating of the pet food is easily obtained.

The pet food of the present embodiment satisfies the prescription of the content of methionine specific to the comprehensive nutritional diet for cats and thus the pet food is suitable for cats. Particularly, the pet food is suitable as the comprehensive nutritional diet for cats.

The prescriptions of the contents of components other than methionine in the comprehensive nutritional diet for cats can be satisfied by adjusting the amounts of mock meat pieces and the meat flakes to be blended and adjusting the amounts of vitamins and minerals to be blended within the range that satisfies the prescription of the content of methionine.

In order to inform the pet owner that the pet food of the present embodiment is suitable for cats, when the pet food of the present embodiment is packaged and sold, it is possible to sell the product in a state in which an instruction that the pet food is suitable for cats is displayed on the package. Further, an instruction that the pet food is a comprehensive nutritional diet for cats can be displayed on the package and sold.

In the ranges of the present specification and the claims, the term "pet" indicates an animal that has been bred by a person. In a narrower sense, a pet is an animal cared for by the owner. In addition, the "pet food" indicates feed for pets. The pet food of the present embodiment can be produced and sold as the "feed for animals" or "food for animals."

[Examples]

Hereinafter, the present embodiment will be described in detail with reference to examples, but the present embodiment is not limited the examples described below.

The production of pet food and measurement of physical properties thereof in examples were carried out at room temperature (20°C to 25°C) unless otherwise the temperature is not particularly designated.

(Production Example 1: production example of mock meat pieces)

Mock meat pieces were produced by blending the composition listed in Table 1. In the present example, mock meat pieces were produced without using fibrous soybean protein. As the animal protein raw ingredients, minced fish meat was used.

Specifically, the whole ingredients listed in Table 1 were uniformly mixed using a stirrer, and the obtained mixture was extruded and formed into a rod shape. The extruded product was heated in steam (90°C to 100°C) for 20 minutes, cooled to approximately room temperature, and cut into cubes having a size of 3 to 5 mm with a dicer, thereby obtaining mock meat pieces.

The appearance of the cross-section of a mock meat piece obtained in Production Example 1 was semi-cylindrical.

(Production Examples 2 and 3: production examples of mock meat pieces)

Mock meat pieces were produced by blending the composition listed in Table 1. In Production Examples 2 and 3, fibrous soybean protein was used. A commercially available product (product name: APEX 600, manufactured by FUJI OIL CO., LTD.) was used as the fibrous soybean protein.

Specifically, the whole ingredients listed in Table 1 were uniformly mixed using a stirrer, and the obtained mixture was extruded and formed into a rod shape. The extruded product was heated in steam (100°C) for 20 minutes, cooled to approximately room temperature, and cut into cubes having a size of 3 to 5 mm with a dicer, thereby obtaining mock meat pieces.

The mock meat pieces obtained in Production Examples 2 and 3 were fibrous mock meat pieces produced using fibrous soybean protein and the sections had a fibrous appearance.

[Table 1]

| | | | Production Example 1 | Production Example 2 | Production Example 3 |
|---|---|---|---|---|---|
| Raw ingredients of mock meat pieces [% by mass] | Animal protein raw ingredients | Minced fish meat | 37.70 | 37.70 | 37.70 |
| | Vegetable protein raw ingredients | Wheat gluten | 16.00 | 16.00 | |
| | | Powdery soybean protein | 5.00 | | |
| | | Fibrous soybean protein | | 5.00 | 21.00 |
| | Oils and fats | Chicken fat and soybean oil | 11.00 | 11.00 | 11.00 |
| | Other components | Vitamins and minerals | 4.47 | 4.47 | 4.47 |
| | | Sodium tripolyphosphate | 0.80 | 0.80 | 0.80 |
| | | Starch adhesive | 3.50 | 3.50 | 3.50 |
| | Water | | 21.53 | 21.53 | 21.53 |
| | Total amount | | 100.00 | 100.00 | 100.00 |
| Total amount of animal protein raw ingredients [% by mass] | | | 37.70 | 37.70 | 37.70 |
| Total amount of vegetable protein raw ingredients [% by mass] | | | 21.00 | 21.00 | 21.00 |
| Animal protein raw ingredients/vegetable protein raw ingredients (mass ratio) | | | 64.2/35.8 | 64.2/35.8 | 64.2/35.8 |
| Total amount of fibrous vegetable protein raw ingredients [% by mass] | | | 0.00 | 5.00 | 21.00 |

(Production Examples 4 to 10: production examples of mock meat pieces)

Mock meat pieces were produced by blending the composition listed in Table 2. In Production Examples 4 to 10, fibrous mock meat pieces were produced using a method of kneading a raw ingredient mixture in a state in which the raw ingredient mixture is heated and pressed, cooling, followed by extruding the mixture. As a kneading extruder, a device provided with a cooling die in a discharging unit of a biaxial extruder was used.

Specifically, the whole raw ingredients listed in Table 2 were uniformly mixed with each other using a stirrer and the obtained raw ingredient mixture was continuously supplied to an extruder. The pressure applied to the discharging end of the extruder was controlled to be in a range of 74 to 80 psi (approximately 510 to 552 kPa) using a high-pressure pump. The raw ingredient mixture was kneaded by the pressure and mechanical shear of the extruder and the temperature of the kneaded product was increased to be in a range of 149°C to 153°C. Thereafter, the kneaded product was cooled to lower than 100°C using a cooling die and extruded and formed into a rod shape. Next, the extrusion-formed product was cut into cubes having a size of 3 to 5 mm with a dicer, thereby obtaining mock meat pieces.

[Table 2]

| Raw ingredients of mock meat pieces [% by mass] | | | Production Example 4 | Production Example 5 | Production Example 6 | Production Example 7 | Production Example 8 | Production Example 9 | Production Example 10 |
|---|---|---|---|---|---|---|---|---|---|
| Animal protein raw ingredients | Minced fish meat | 51.50 | 48.25 | 48.59 | 16.52 | 24.80 | 49.14 | 18.43 |
| | Poultry meat | | | | 18.82 | 9.41 | | 18.82 |
| | Dried egg white | | | 1.09 | 0.75 | 0.92 | 1.09 | 0.75 |
| | Milk protein concentrate | | | 3.83 | 1.92 | 2.87 | 3.83 | 1.92 |
| Vegetable protein raw ingredients | Wheat gluten | 34.50 | 31.25 | 36.51 | 16.00 | 18.50 | | 1.91 |
| | Powdery soybean protein | | | | 5.00 | 2.50 | 35.96 | 19.09 |
| Oils and fats | Fish oil | 7.00 | 7.50 | 3.98 | 2.76 | 3.37 | 3.98 | 2.76 |
| Other components | Fish bone (frozen and pulverized product) | | | | 4.94 | 2.47 | | 4.94 |
| | Sodium nitrite | | | | 0.20 | 0.10 | | 0.20 |
| | Sodium tripolyphosphate | | | | 0.12 | 0.06 | | 0.12 |
| | Other salts | 1.00 | 1.00 | 0.90 | 0.45 | 0.68 | 0.90 | 0.45 |
| | Vitamins and minerals | 4.50 | 4.50 | 4.50 | 4.50 | 4.50 | 4.50 | 4.50 |
| | Cellulose | 1.50 | 6.50 | | 0.19 | 0.10 | | 0.19 |
| | Colorant | | | | 0.20 | 0.10 | | 0.20 |
| | Tricalcium phosphate | | 1.00 | | | | | |
| | Emulsifier | | | 0.60 | 0.30 | 0.45 | 0.60 | 0.30 |
| Water | | 0.00 | 0.00 | 0.00 | 27.33 | 29.17 | 0.00 | 25.42 |
| Total amount | | 100.00 | 100.00 | 100.00 | 100.00 | 100.00 | 100.00 | 100.00 |
| Total amount of animal protein raw ingredients [% by mass] | | 51.50 | 48.25 | 53.51 | 38.01 | 38.00 | 54.06 | 39.92 |

(continued)

|  | Production Example 4 | Production Example 5 | Production Example 6 | Production Example 7 | Production Example 8 | Production Example 9 | Production Example 10 |
|---|---|---|---|---|---|---|---|
| Total amount of vegetable protein raw ingredients [% by mass] | 34.50 | 31.25 | 36.51 | 21.00 | 21.00 | 35.96 | 21.00 |
| Animal protein raw ingredients/vegetable protein raw ingredients (mass ratio) | 59.9/40.1 | 60.7/39.3 | 59.4/40.6 | 64.4/35.6 | 64.4/35.6 | 60.1/40.0 | 65.5/34.5 |

(Examples 1 to 10: production of pet food)

Meat flakes were prepared. Specifically, fish was heated with steam, was cooled to room temperature, and cut into flakes, thereby obtaining fish flakes having a long diameter of 5 to 30 mm.

Liquid soup portions were prepared by blending oils and fats, a thickener, other additives (a fish extract and a seasoning), and water according to the compositions listed in Table 3.

The mock meat pieces produced in Production Examples 1 to 10, fish flakes, and soup portions were mixed with each other according to the compositions listed in Table 3, and pouch containers were filled with the mixtures and heated at 118°C for 40 minutes, thereby obtaining pet foods.

The moisture contents, the contents of vegetable protein raw ingredients, the contents of methionine, and the mass ratios of the contents of mock meat pieces to the contents of meat flakes in the obtained pet foods (mock meat pieces:flakes) are listed in the table.

[Table 3]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Blending of pet food [% by mass] | Mock meat pieces | Prod. Ex. 1 | 17.5 | | | | | | | | | |
| | | Prod. Ex. 2 | | 20 | | | | | | | | |
| | | Prod. Ex. 3 | | | 12.5 | | | | | | | |
| | | Prod. Ex. 4 | | | | 20 | | | | | | |
| | | Prod. Ex. 5 | | | | | 20 | | | | | |
| | | Prod. Ex. 6 | | | | | | 20 | | | | |
| | | Prod. Ex. 7 | | | | | | | 20 | | | |
| | | Prod. Ex. 8 | | | | | | | | 20 | | |
| | | Prod. Ex. 9 | | | | | | | | | 20 | |
| | | Prod. Ex. 10 | | | | | | | | | | 20 |
| | Fish flakes | | 17.5 | 20 | 12.5 | 20 | 20 | 20 | 20 | 20 | 20 | 20 |
| | Soup portion | Oils and fats | 2 | 2 | 2 | 2 | 2 | 2 | 2 | 2 | 2 | 2 |
| | | Thickener | 1 | 1 | 1 | 1 | 1 | 1 | 1 | 1 | 1 | 1 |
| | | Other additives | 2.5 | 2.5 | 2.5 | 2.5 | 2.5 | 2.5 | 2.5 | 2.5 | 2.5 | 2.5 |
| | | water | 59.5 | 54.5 | 69.5 | 54.5 | 54.5 | 54.5 | 54.5 | 54.5 | 54.5 | 54.5 |
| | Total amount | | 100 | 100 | 100 | 100 | 100 | 100 | 100 | 100 | 100 | 100 |
| Moisture content [% by mass] | | | 78.8 | 75.7 | 84.7 | 75.7 | 75.7 | 75.7 | 75.7 | 75.7 | 75.7 | 75.7 |
| Content of vegetable protein (in terms of dry matter) [% by mass] | | | 17.3 | 17.3 | 17.3 | 28.4 | 25.7 | 30.0 | 17.3 | 17.3 | 29.6 | 17.3 |
| Content of methionine (in terms of dry matter) [% by mass] | | | 1.2 | 1.2 | 1.2 | 0.8 | 0.9 | 0.8 | 1.2 | 1.2 | 0.8 | 1.3 |
| Mass ratio of mock meat pieces to flakes | | | 50:50 | 50:50 | 50:50 | 50:50 | 50:50 | 50:50 | 50:50 | 50:50 | 50:50 | 50:50 |

EP 3 187 054 A1

13

In all the pet foods obtained in Examples 1 to 10, the content of methionine was in a range of 0.62% to 1.5% by mass. It was confirmed that other components satisfied the standards of the comprehensive nutritional diet prescribed by AAFCO.

Hereinbefore, preferred examples of the present invention have been described, but the present invention is not limited thereto. Addition, omission, substitution, and other modifications of configurations are possible within the range not departing from the scope of the present invention. Further, the present invention is not limited by the description above and only limited by the range of claims.

**Claims**

1. A pet food comprising:

   mock meat pieces which contain animal protein raw ingredients and vegetable protein raw ingredients; and meat flakes,
   wherein the moisture content is 50% by mass or greater,
   the content of vegetable protein is 4% by mass or greater in terms of dry matter, and
   the content of methionine is in a range of 0.62% to 1.5% by mass in terms of dry matter.

2. The pet food according to claim 1,
   wherein the mock meat pieces include fibrous mock meat pieces.

3. The pet food according to claim 1 or 2,
   wherein the mass ratio of the content of mock meat pieces to the content of meat flakes is in a range of 40:60 to 60:40.

4. The pet food according to any one of claims 1 to 3,
   wherein the mock meat pieces are obtained by extruding and forming, heating, and cutting a raw ingredient mixture containing animal protein raw ingredients and vegetable protein raw ingredients.

5. The pet food according to claim 4,
   wherein the mock meat pieces contain 5% to 50% by mass of fibrous vegetable protein raw ingredients as the vegetable protein raw ingredients.

6. The pet food according to any one of claims 1 to 3,
   wherein the mock meat pieces are obtained by performing a process of kneading, cooling, and extruding and forming a raw ingredient mixture containing animal protein raw ingredients and vegetable protein raw ingredients while pressurizing and heating the raw ingredient mixture.

## INTERNATIONAL SEARCH REPORT

| International application No. |
| --- |
| PCT/JP2015/067278 |

A. CLASSIFICATION OF SUBJECT MATTER
*A23K1/18(2006.01)i, A23K1/00(2006.01)i, A23K1/16(2006.01)i*

According to International Patent Classification (IPC) or to both national classification and IPC

B. FIELDS SEARCHED

Minimum documentation searched (classification system followed by classification symbols)
A23K1/18, A23K1/00, A23K1/16

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2014/092158 A1 (Uni-Charm Corp.), 19 June 2014 (19.06.2014), entire text (Family: none) | 1-6 |
| Y | Cat Food Standards by the AAFCO, Pet Education, [online], 2015.09.10, 2009.05.26 (archival date) Internet <https://web.archive.org/web/20090526152019/http://www.peteducation.com/article.cfm?c=1+2244&aid=657> | 1-6 |

| ☒ | Further documents are listed in the continuation of Box C. | ☐ | See patent family annex. |

| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 14 September 2015 (14.09.15) | 29 September 2015 (29.09.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/067278

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2010-505424 A  (Solae L.L.C.), 25 February 2010 (25.02.2010), entire text; all drawings & JP 5242579 B        & US 2010/0166940 A1 & WO 2008/043076 A2    & EP 2079841 A & KR 10-2009-0079216 A  & CN 101522042 A & MX 2009003521 A      & BR PI0715304 A | 2-5 |
| Y | JP 2003-513679 A  (Societe des Produits Nestle S.A.), 15 April 2003 (15.04.2003), entire text & JP 2011-101641 A      & JP 5128742 B & JP 2013-31442 A       & JP 2010-512788 A & US 6379738 B1         & US 2007/0148323 A1 & US 2002/0106442 A1    & WO 2001/035766 A1 & WO 2008/085293 A2    & EP 1231846 A & EP 1736062 A2         & EP 2101589 A & EP 2599388 A2 | 2,6 |

Form PCT/ISA/210 (continuation of second sheet) (July 2009)

**EP 3 187 054 A1**

**Patent documents cited in the description**

- JP 2014176529 A
- JP 2007020448 A